# EUROPÄISCHE PATENTANMELDUNG

(11) **EP 1 086 860 A2**
(43) Veröffentlichungstag der Anmeldung: **28.03.2001**
(21) Anmeldenummer: 00119497.6
(22) Anmeldetag: 18.09.2000
(51) Int. Cl.: B60R 21/16

(54) **Fahrzeuginsassen-Rückhaltevorrichtung**

(30) Priorität: 20.09.1999 DE 29916526 U; 26.04.2000 DE 10020353
(71) Anmelder: TRW Occupant Restraint Systems GmbH & Co. KG, 73553 Alfdorf (DE)
(72) Erfinder: Eyrainer, Heinz, 73550 Waldstetten (DE); Heilig, Alexander, 73550 Wissgoldingen (DE); Dannenhauer, Reiner, 73642 Welzheim (DE)
(74) Vertreter: Kitzhofer, Thomas, Dipl.-Ing.

(57) **Zusammenfassung**

Eine Fahrzeuginsassen-Rückhaltevorrichtung mit einem ersten Gassack (12) zum Schutz des Thoraxbereichs eines Fahrzeuginsassen (10), ist dadurch gekennzeichnet, daß zur Abstützung des ersten Gassacks (12) ein zweiter Gassack (16) vorgesehen ist, der sich im entfalteten Zustand zumindest teilweise über die Windschutzscheibe (22) des Fahrzeugs erstreckt.

## Beschreibung

Die Erfindung betrifft eine Fahrzeuginsassen-Rückhaltevorrichtung zum Schutz eines Fahrzeuginsassen bei einer Fahrzeugkollision.

Bekannte Fahrzeuginsassen-Rückhaltevorrichtungen mit einem Gassack zum Schutz des Thoraxbereichs eines Fahzeuginsassen bieten bei bestimmten Unfallsituationen oft nur einen unzureichenden Schutz vor Halswirbelsäulenverletzungen.

Mit der Erfindung wird eine Fahrzeuginsassen-Rückhaltevorrichtung geschaffen, die sich flexibel an die jeweilige Unfallsituation anpassen und mit der das Verletzungsrisiko eines Fahrzeuginsassen äußerst gering gehalten werden kann. Gemäß der Erfindung ist bei einer Fahrzeuginsassen-Rückhaltevorrichtung mit einem ersten Gassack zum Schutz des Thoraxbereichs eines Fahrzeuginsassen zur Abstützung des ersten Gassacks ein zweiter Gassack vorgesehen, der sich im entfalteten Zustand zumindest teilweise über die Windschutzscheibe des Fahrzeugs erstreckt.

Der zusätzliche zweite Gassack dient bei einer Fahrzeugkollision im Bedarfsfall als Abstützung für den ersten Gassack und hält diesen während des Unfallverlaufs in einer vorbestimmten Position, so daß eine optimale Schutzfunktion durch den ersten Gassack gewährleistet ist. Die sichergestellte definierte Position des ersten Gassacks und die gegebenenfalls mögliche Aufteilung der Aufprallenergie des Fahrzeuginsassen auf zwei getrennte Gassäcke erlaubt es, das Volumen des ersten Gassacks von etwa 100 bis 150 Litern heute üblicher Thorax-Gassäcke auf etwa 70 bis 90 Liter zu reduzieren, ohne daß dadurch die Schutzwirkung beeinträchtigt wird. Somit können aufgrund der Reduzierung der erforderlichen Gasmenge kostengünstigere Gasgeneratoren zum Aufblasen des Gassacks eingesetzt werden. Außerdem ermöglicht die Verwendung eines volumenreduzierten Gassacks eine Verkürzung der Aufblaszeit im Vergleich zu herkömmlichen Thorax-Gassäcken, und es besteht eine verminderte Verletzungsgefahr für den Insassen während des Entfaltungsvorgangs.

Der zweite Gassack verhindert zudem einen Kontakt des Kopfes des Insassen mit der Windschutzscheibe, wobei durch die Anordnung der beiden Gassäcke ein gezielter Bewegungsfreiraum für den Kopf des Fahrzeuginsassen geschaffen ist, so daß die Beschleunigungsmomente auf den Hals bei einem Unfall gering gehalten werden. Dadurch wird eine deutliche Reduzierung der Halswirbensäulenbelastung ermöglicht.

Vorzugsweise ist der zweite Gassack so angeordnet, daß er sich im entfalteten Zustand an der Windschutzscheibe abstützt. Damit ist eine optimale Schutzwirkung für den Fahrzeuginsassen gewährleistet, da bei einer solchen Konstellation indirekt der erste Gassack über den zweiten Gassack an der Windschutzscheibe abgestützt wird und somit der Aufprall des Fahrzeuginsassen bestmöglich abgefangen werden kann. Zur weiteren Vermeidung von Kopfverletzungen durch einen möglichen Kontakt des Kopfes des Fahrzeuginsassen mit der A-Säule des Fahrzeugs bei einem schrägen oder versetzten Aufprall erstreckt sich der zweite Gassack im entfalteten Zustand vorzugsweise über wenigstens einen Bereich der A-Säule.

Es erweist sich aus funktioneller und konstruktioneller Sicht als besonders vorteilhaft, den zweiten Gassack im Dachhimmel des Fahrzeugs unterzubringen. Bei dieser bevorzugten Ausführungsform entfaltet sich der zweite Gassack von oben nach unten entlang der Windschutzscheibe, womit keinerlei Gefährdungspotential für den Insassen bei der Entfaltung des Gassacks gegeben ist, vor allem wenn er sich in einer sogenannten Out-Of-Position-Stellung befindet, d.h. wenn er keine normale Sitzposition einnimmt. Dies ist oft bei Kindern auf den Vordersitzen der Fall. Insbesondere bei Cabrios, die kein festes Dach haben, kann der zweite Gassack jedoch auch im Armaturenbrett oder im Bereich der A-Säule des Fahrzeugs untergebracht sein.

Bei Fahrzeugen, die sowohl eine fahrer- als auch eine beifahrerseitige Rückhalteeinrichtung mit jeweils einem Gassack zum Schutz des Thoraxbereichs aufweisen, ist es vorteilhaft, wenn sich der zweite Gassack im wesentlichen über die gesamte Breite der Windschutzscheibe erstreckt. Er kann dann bei einer Kollision sowohl als Abstützung für den fahrer- als auch für den beifahrerseitigen Thorax-Gassack dienen. Es können jedoch auch zwei getrennte Systeme mit jeweils einer erfindungsgemäßen Fahrzeuginsassen-Rückhaltevorrichtung vorgesehen sein.

Bei einer Weiterbildung der erfindungsgemäßen Vorrichtung ist ein Zugsystem vorgesehen, das den entfalteten zweiten Gassack nach einer Fahrzeugkollision von der Windschutzscheibe wegzieht, um das Sichtfeld für den Fahrer bzw. Beifahrer wieder freizugeben.

Der erste Gassack zum Schutz des Thoraxbereichs des Fahrzeuginsassen kann bei einer Vorrichtung für den Fahrer eines Kraftfahrzeugs im Lenkrad oder bei einer Vorrichtung für den Beifahrer im Armaturenbrett des Fahrzeugs untergebracht sein. Eine zusätzliche Schutzfunktion ergibt sich in letzterem Fall durch die Unterbringung des ersten Gassacks im unteren, den Fußraum begrenzenden Bereich des Armaturenbretts. Der sich im entfalteten Zustand vom Fußraum über das Armaturenbrett erstreckende Gassack erfüllt dann nämlich auch die Funktion einer Knie-Schutzvorrichtung.

Eine zusätzlicher Schutz des Kniebereichs des Fahrzeuginsassen kann auch dadurch erreicht werden, daß ein dritter Gassack vorgesehen ist, der sich im Fußraum des Fahrzeugs entfaltet. Besonders platzsparend ist eine Ausführungsform, bei der ein Gasgenerator zum Aufblasen von mehr als einem der Gassäcke vorgesehen ist.

Eine noch bessere Anpassung an die jeweilige Unfallsituation und auch an die Parameter des Fahrzeuginsassen wird dadurch ermöglicht, daß ein mehrstufiger Gasgenerator zum Aufblasen wenigstens des ersten Gassacks eingesetzt wird. So kann beispielsweise je nach Stärke der Fahrzeugkollision und Gewicht des Fahrzeuginsassen der erste Gassack härter oder weniger hart aufgeblasen werden. Auch eine kontrollierte zeitliche Verzögerung beim Aufblasen ist somit möglich.

Weitere Merkmale und Vorteile der Erfindung ergeben sich aus der nachfolgenden Beschreibung bevorzugter Ausführungsformen unter Bezugnahme auf die Zeichnung. In dieser zeigen:
Fig. 1 eine Ausführungsform einer fahrerseitigen Fahrzeuginsassen-Rückhaltevorrichtung in einem Kraftfahrzeug;
Fig. 2 eine Ausführungsform einer beifahrerseitigen Fahrzeuginsassen-Rückhaltevorrichtung in einem Kraftfahrzeug;
Fig. 3 eine Variante der Ausführungsform aus Fig. 2;
Fig. 4 eine weitere Ausführungsform einer beifahrerseitigen Fahrzeuginsassen-Rückhaltevorrichtung in einem Kraftfahrzeug;
Fig. 5 Ausführungsformen des den zweiten Gassack aufweisenden Teils einer fahrerseitigen und einer beifahrerseitigen Fahrzeuginsassen-Rückhaltevorrichtung mit getrennten Gasversorgungssystemen in einem Kraftfahrzeug in Draufsicht;
Fig. 6 Ausführungsformen des den zweiten Gassack aufweisenden Teils einer fahrerseitigen und einer beifahrerseitigen Fahrzeuginsassen-Rückhaltevorrichtung mit einem gemeinsamen Gasversorgungssystem in einem Kraftfahrzeug in Draufsicht;
Fig. 7 einen Teil der fahrerseitigen Fahrzeuginsassen-Rückhaltevorrichtung aus Fig. 5 in einer vergrößerten Ansicht;
Fig. 8 einen Schnitt durch den Teil der Fahrzeuginsassen-Rückhaltevorrichtung, entlang der Linie VII - VII in Fig. 7 im nicht aufgeblasenen Zustand des zweiten Gassacks; und
Fig. 9 die Fahrzeuginsassen-Rückhaltevorrichtung aus Fig. 8 im aufgeblasenen Zustand.

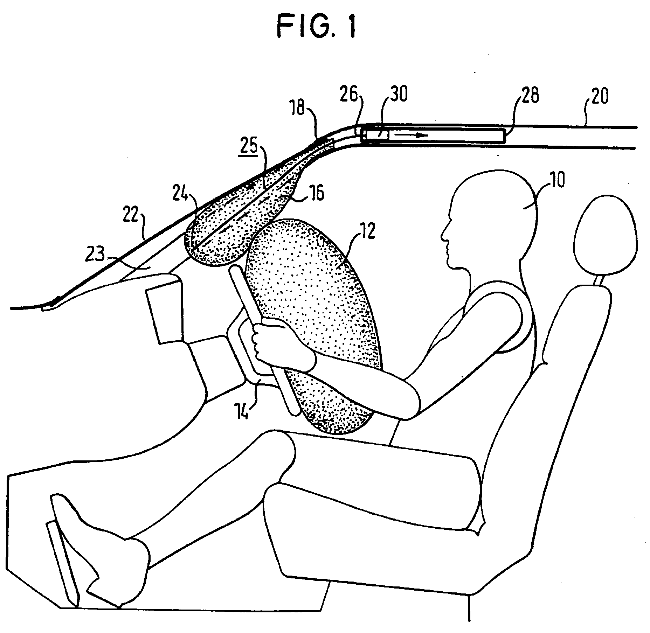

In Fig. 1 ist eine Fahrzeuginsassen-Rückhaltevorrichtung für den Fahrer eines Kraftfahrzeugs im ausgelösten Zustand dargestellt. Ein erster Gassack 12 zum Schutz des Thoraxbereichs des Fahrzeuginsassen 10 hat sich aus dem Lenkrad 14 heraus entfaltet. Ein zweiter Gassack 16, der sich vor dem ersten Gassack 12 aus einer Aufnahme 18 im Dachhimmel 20 oberhalb der Windschutzscheibe 22 von oben nach unten entfaltet hat, erstreckt sich über den oberen Bereich der Windschutzscheibe 22 des Fahrzeugs. Der zweite Gassack 16, der direkt an der Windschutzscheibe 22 anliegt, stützt den ersten Gassack 12 indirekt an der Windschutzscheibe 22 ab, so daß dieser in seiner vorbestimmten Position gehalten wird. Ferner deckt der zweite Gassack 16 vorzugsweise die gesamte A-Säule 23 des Fahrzeugs zum Insassen hin ab. An der äußeren Oberfläche des zweiten Gassacks 16 ist ein erstes Ende 24 eines Bands 25 befestigt. Das zweite Ende 26 des Bandes ist an den Kolben 30 einer im Dachhimmel 20 des Fahrzeugs angeordneten Kolben/-Zylinder-Einheit 28 gekoppelt. Durch die Aktivierung dieser Kolben/-Zylinder-Einheit 28 nach der Fahrzeugkollision, beispielsweise durch Beaufschlagen der der Windschutzscheibe zugewandten Seite des Kolbens 30 mit einem Druckgas, bewegt sich der Kolben 30 von der Windschutzscheibe 22 weg und zieht dadurch den entfalteten zweiten Gassack 16 von der Windschutzscheibe 22 weg, so daß die Sicht nach vorne durch die Windschutzscheibe 22 wieder freigegeben ist. Band 25 und Kolben/-Zylinder-Einheit 28 bilden ein Zugsystem.

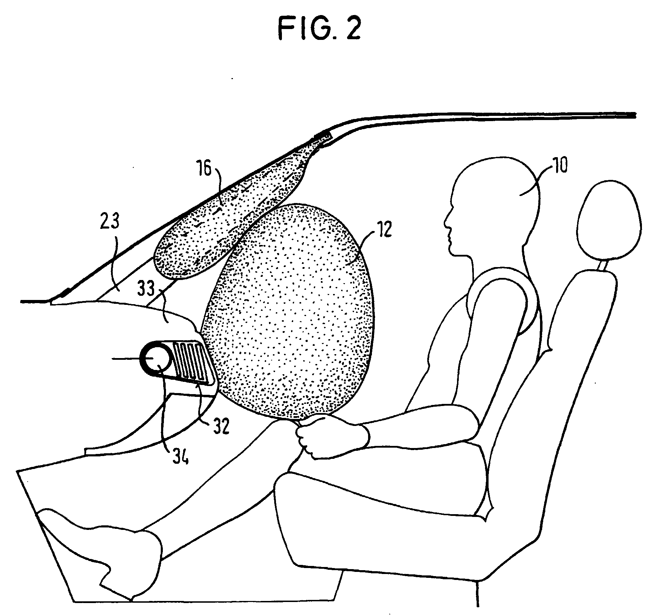

Fig. 2 zeigt eine Rückhaltevorrichtung für den Beifahrer eines Kraftfahrzeugs, die weitgehend der in Fig. 1 dargestellten Vorrichtung entspricht, jedoch ohne Rückhaltesystem 24, 28 für den zweiten Gassack 16. Im Unterschied zu der Vorrichtung der Fig. 1 hat sich der erste Gassack 12 zum Schutz des Thoraxbereichs aus einer dem Oberkörper des Fahrzeuginsassen 10 zugewandten Aufnahme 32 des Armaturenbretts 33 heraus entfaltet. In der Aufnahme 32 des Armaturenbretts 33 ist auch ein mehrstufiger Gasgenerator 34 angedeutet, mit dem der erste Gassack 12 entsprechend den jeweiligen Anforderungen aufgeblasen wird. Der zweite Gassack 16 kann alternativ auch unterhalb der Verkleidung der A-Säule 23 untergebracht sein.

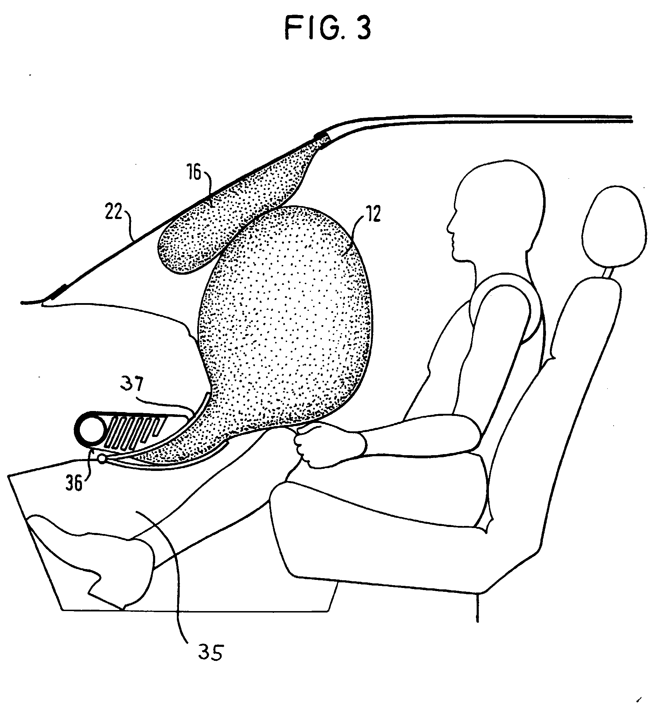

Die in Fig. 3 dargestellte Fahrzeuginsassen-Rückhaltevorrichtung unterscheidet sich von der in Fig. 2 gezeigten dadurch, daß der erste Gassack 12 in einer im unteren, den Fußraum 25 begrenzenden Bereich 37 des Armaturenbretts 33 angeordneten Aufnahme 36 untergebracht war und sich vom Fußraum her über das Armaturenbrett 33 bis hin zum zweiten Gassack 16 entfaltet hat, der den ersten Gassack 12 wiederum an der Windschutzscheibe 22 abstützt. Der erste Gassack 12 erfüllt bei dieser Ausführungsform zusätzlich die Funktion einer Knie-Schutzeinrichtung, die ansonsten beispielsweise das Vorsehen eines separaten sogenannten Kneebags voraussetzt.

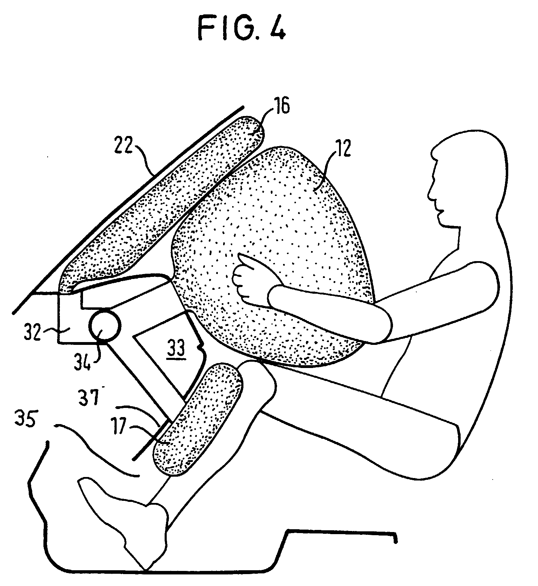

Bei der Ausführungsform der Fig. 4 ist zusätzlich zu dem ersten beifahrerseitigen Gassack 12 und dem zweiten Gassack 16, an dem sich der erste Gassack 12 abstützt, ein dritter Gassack 17 zum Schutz des Kniebereichs des Fahrzeuginsassen vorgesehen. Der dritte Gassack entfaltet sich im Fußraum 35 des Fahrzeugs und stützt sich an einem den Fußraum 35 begrenzenden Bereich 37 des Armaturenbretts 33 ab. Gemäß der dargestellten Ausführungsform hat sich der zweite Gassack 16 im Gegensatz zu den bisher beschriebenen Ausführungsformen aus einer der Windschutzscheibe 22 zugewandten Öffnung des Armaturenbretts 33 (vorzugsweise den Öffnungen des Lüftungskanals) von unten nach oben entfaltet. Der Gassack ist hier im Bereich des Armaturenbretts nahe der Windschutzscheibe 22 untergebracht. Bei der gezeigten Ausführungsform werden alle drei Gassäcke 12, 16, 17 von einem einzigen Gasgenerator 34 eines Gassackmoduls aufgeblasen, das in einer Aufnahme 32 des Armaturenbrett 33 untergebracht ist. Es können aber auch zwei oder drei verschiedene Gasgeneratoren vorgesehen sein.

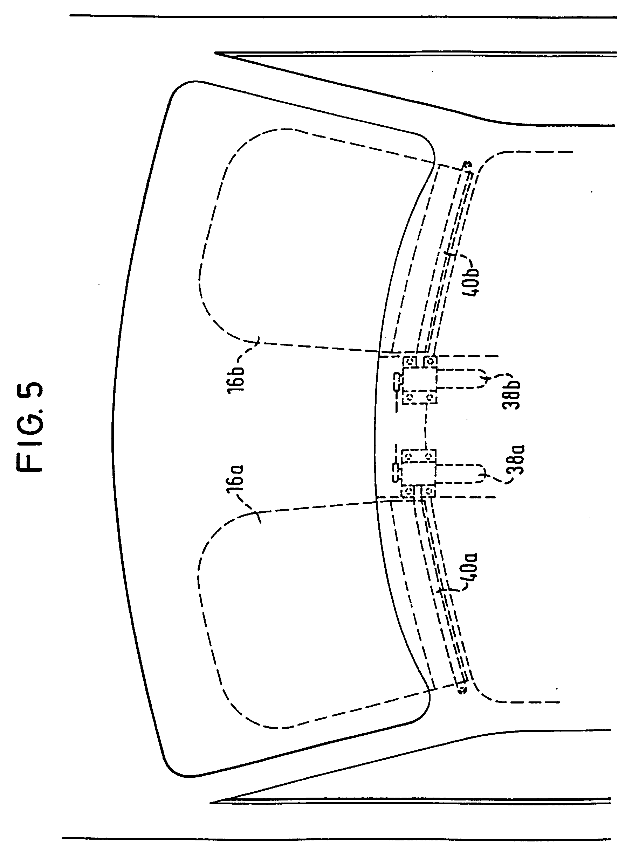

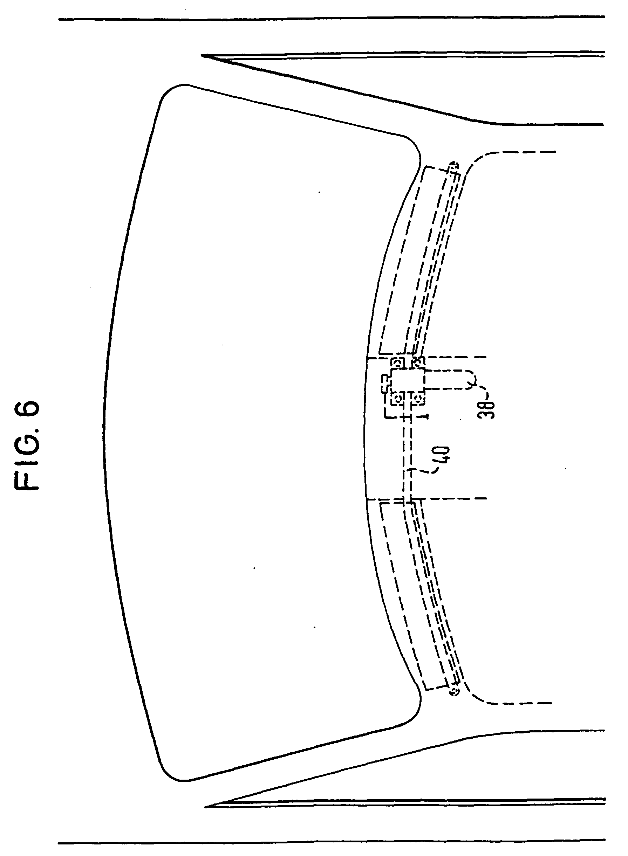

In Fig. 5 ist eine Ausführungsform der Erfindung gezeigt, die auf der Fahrer- und auf der Beifahrerseite jeweils einen separaten zweiten Gassack vorsieht. In einer Ansicht von oben auf das Fahrzeug sind der fahrerseitige zweite Gassack 16a und der beifahrerseitige zweite Gassack 16b im aufgeblasenen Zustand zu sehen. In dieser Ausführungsform ist zudem für den fahrer- und für den beifahrerseitigen zweiten Gassack 16a, 16b jeweils ein eigenes Gasversorgungssystem mit Gasgeneratoren 38a, 38b und Gasrohren 40a, 40b vorgesehen, die im Dachhimmel des Fahrzeugs untergebracht sind. Es können aber auch, wie in der in Fig. 6 gezeigten Ausführungsform, fahrer- und beifahrerseitiger Gassack aus einem gemeinsamen Gasversorgungssystem mit einem einzigen Gasgenerator 38 und einem Gasrohr 40, das sich in oder durch beide Gassäcke hindurch erstreckt, versorgt werden.

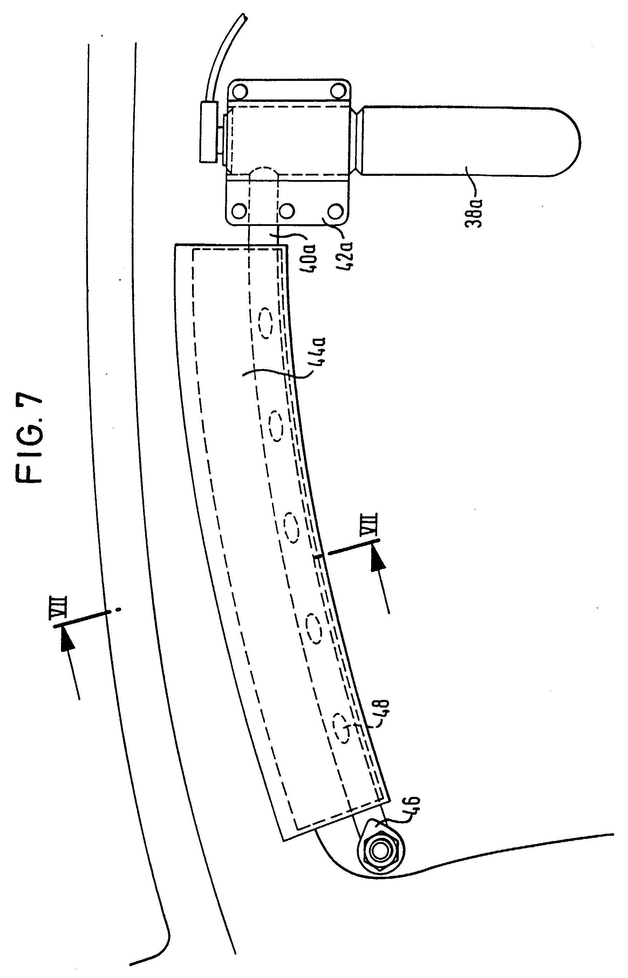

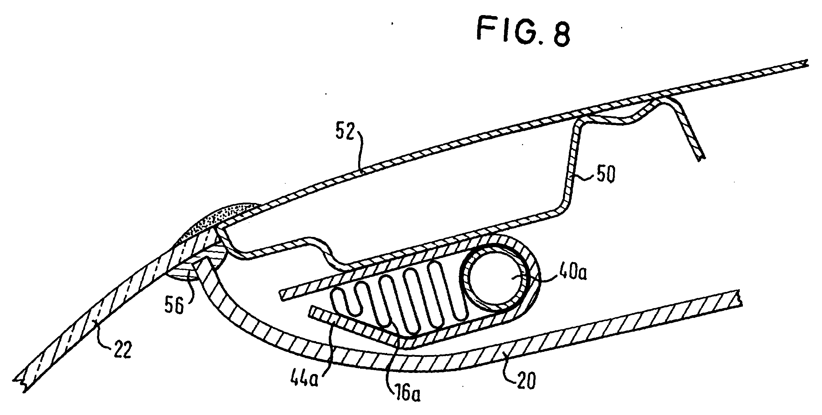

Das beifahrerseitige Gassack-Modul der Ausführungsform mit den getrennten Gasversorgungssystemen aus Fig. 5 ist in Fig. 7 in einer vergrößerten Ansicht zu sehen. Der Gasgenerator 38a ist mittels des Gehäuses 42a am Fahrzeugdach befestigt. Das Gasrohr 40a erstreckt sich vom Gasgenerator 38a durch das Gassackgehäuse 44a und den darin eingefalteten Gassack, der im Schnitt in Fig. 8 besser zu sehen ist. An seinem anderen Ende ist das Gasrohr mit einer Halterung 46 am Fahrzeug befestigt. Der im Innern des Gassackes befindliche Abschnitt des Gasrohrs 40a weist Ausströmöffnungen 48 auf.

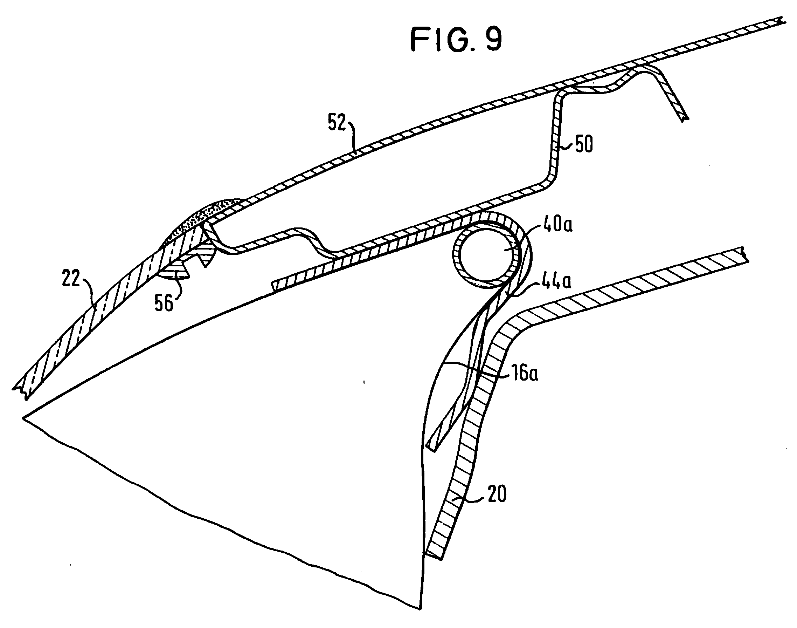

In Fig. 8 ist zu sehen, daß das Gassackgehäuse 44a an einem Verstärkungsblech 50 des Fahrzeugdachs 52 unter dem Dachhimmel 20 angebracht ist. Bei der Aktivierung (Fig. 9) wird das Gassackgehäuse 44a durch den sich entfaltenden Gassack aufgedrückt. Außerdem drückt der Gassack 16a den Dachhimmel 20 aus seiner Halterung 56 an der Windschutzscheibe 22, so daß sich der Gassack 16a in Richtung der Windschutzscheibe 22 ausbreiten kann.

Bei allen Ausführungsformen ist vorgesehen, daß der zweite Gassack 16, 16a, 16b nur dann entfaltet wird, wenn es die Unfallsituation oder entsprechende andere Umstände, z.B. die Parameter des Fahrzeuginsassen 10 erfordern.

Bei Einsatz der erfindungsgemäßen Fahrzeuginsassen-Rückhaltevorrichtung mit einem zweistufigen Gasgenerator 34 im Zusammenspiel mit Gurtanlege-, Sitzbelegungs- und Geschwindigkeitssensoren ist eine um den Faktor 2 höhere Zahl von Abstimmungskombinationen möglich.

## Patentansprüche

1. Fahrzeuginsassen-Rückhaltevorrichtung mit einem ersten Gassack (12) zum Schutz des Thoraxbereichs eines Fahrzeuginsassen (10), dadurch gekennzeichnet, daß zur Abstüzung des ersten Gassacks (12) ein zweiter Gassack (16, 16a, 16b) vorgesehen ist, der sich im entfalteten Zustand zumindest teilweise über die Windschutzscheibe (22) des Fahrzeugs erstreckt.

2. Vorrichtung nach Anspruch 1, dadurch gekennzeichnet, daß der zweite Gassack (16, 16a, 16b) so angeordnet ist, daß er sich im entfalteten Zustand an der Windschutzscheibe (22) abstützt.

3. Vorrichtung nach Anspruch 1 oder 2, dadurch gekennzeichnet, daß sich der zweite Gassack (16) im entfalteten Zustand über wenigstens einen Bereich der A-Säule des Fahrzeugs erstreckt.

4. Vorrichtung nach einem der vorstehenden Ansprüche, dadurch gekennzeichnet, daß der zweite Gassack (16, 16a, 16b) im Dachhimmel (20) des Fahrzeugs untergebracht ist.

5. Vorrichtung nach einem der Ansprüche 1 bis 3, dadurch gekennzeichnet, daß der zweite Gassack (16) im Bereich des Armaturenbretts (33) des Fahrzeugs untergebracht ist.

6. Vorrichtung nach einem der Ansprüche 1 bis 3, dadurch gekennzeichnet, daß der zweite Gassack (16) im Bereich der A-Säule des Fahrzeugs untergebracht ist.

7. Vorrichtung nach einem der vorstehenden Ansprüche, dadurch gekennzeichnet, daß sich der zweite Gassack (16) im wesentlichen über die gesamte Breite der Windschutzscheibe (22) erstreckt.

8. Vorrichtung nach einem der vorstehenden Ansprüche, dadurch gekennzeichnet, daß ein Zugsystem (25, 28) vorgesehen ist, das den entfalteten zweiten Gassack (16) nach einer Fahrzeugkollision von der Windschutzscheibe (22) wegzieht.

9. Vorrichtung nach einem der vorstehenden Ansprüche, dadurch gekennzeichnet, daß der erste Gassack (12) im Lenkrad (14) des Fahrzeugs untergebracht ist.

10. Vorrichtung nach einem der vorstehenden Ansprüche, dadurch gekennzeichnet, daß der erste Gassack (12) im Armaturenbrett (33) des Fahrzeugs untergebracht ist.

11. Vorrichtung nach Anspruch 10, dadurch gekennzeichnet, daß der erste Gassack (12) im unteren, den Fußraum begrenzenden Bereich des Armaturenbretts (33) untergebracht ist.

12. Vorrichtung nach einem der vorstehenden Ansprüche, dadurch gekennzeichnet, daß ein dritter Gassack (17) vorgesehen ist, der sich im Fußraum des Fahrzeugs entfaltet.

13. Vorrichtung nach einem der vorstehenden Ansprüche, dadurch gekennzeichnet, daß ein Gasgenerator (34) zum Aufblasen von mehr als einem der Gassäcke (12, 16, 17) vorgesehen ist.

14. Vorrichtung nach einem der vorstehenden Ansprüche, dadurch gekennzeichnet, daß ein mehrstufiger Gasgenerator (34) zum Aufblasen wenigstens des ersten Gassacks (12) vorgesehen ist.
